# EUROPEAN PATENT APPLICATION

(11) **EP 2 071 881 A1**
(43) Date of publication of application: **17.06.2009**
(21) Application number: 07024003.1
(22) Date of filing: 11.12.2007
(51) Int. Cl.: H04W 4/00

(54) **Method and device for processing and providing handover information by a network and communications system comprising such device**

(71) Applicant: Nokia Siemens Networks Oy, 02610 Espoo (FI)
(72) Inventor: Suonvieri, Jukka, 34260 Terälahti (FI)
(74) Representative: Schober, Ralf Stefan

(57) **Abstract**

A method and a device are suggested for providing and/or processing handover information by a network wherein the network provides information of at least one base station to a mobile terminal, wherein said at least one base station can be subject to a handover for the mobile terminal, wherein the information comprises information regarding at least one femto base station and wherein the handover information is provided separately for each mobile terminal.

## Description

The invention relates to a method and to a device for providing and/or processing handover information by a network and to a communications system comprising such device.

Pursuant to developments of cellular networks, UMTS indoor coverage shall be improved and new business opportunities for mobile operators emerge by supplementing their cellular network, e.g., UMTS, by a so-called "femto system".

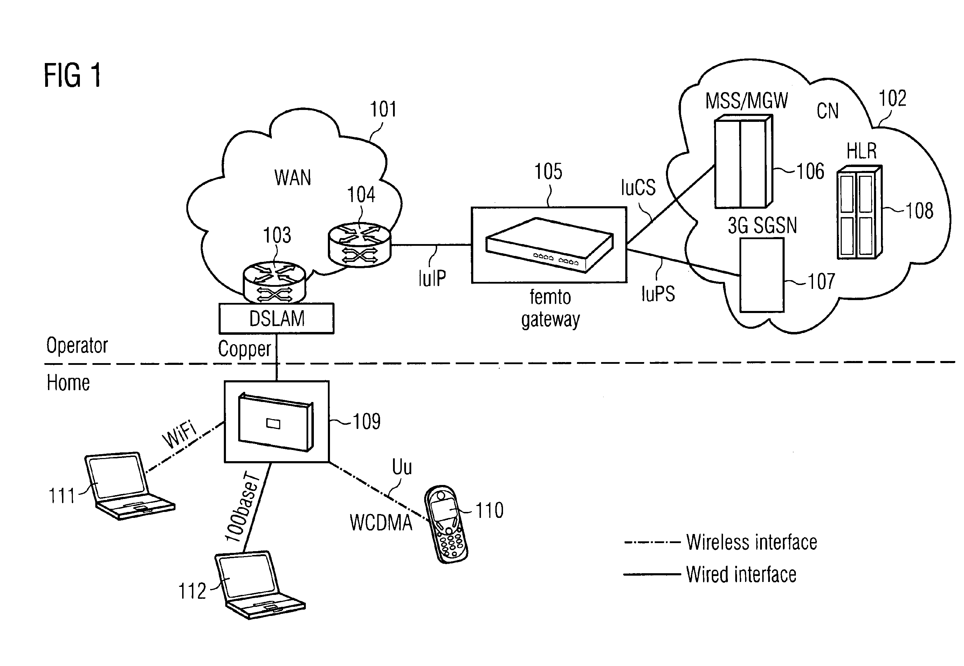

An exemplary architecture of a radio access network (RAN) comprising a femto system is shown in Fig.1.

Fig.1 shows a Wide Area Network WAN 101 that is connected via a gateway 104 and a femto gateway 105 to a core network CN 102. The femto gateway 105 is further connected to a 3G Serving GPRS Support Node (SGSN) 107 and to a Media Gateway MGW 106.

A Digital Subscriber Line Access Multiplexer DSLAM 103 connects the WAN 101 and a femto access point 109. In this scenario, the femto access point 109 comprises an xDSL gateway and 3G access and it may also comprise WiFi access features.

A computer 111 is connected via a WiFi interface to the femto access point 109 and a computer 112 is connected via a wired interface with the femto access point 109. A mobile terminal 110 is connected via a Uu interface utilizing WCDMA with the femto access point 109.

It is to be noted that a femto system may comprise a femto access point FAP (also referred to as a femto cell or femto base station) and optionally a femto gateway FGW to which several femto access points are connected or assigned to.

The radio access network of Fig.1 in particular comprises the following properties:
- The femto system is connected to a UMTS core network CN via the femto gateway FGW. From the UMTS core network's perspective, the femto gateway FGW acts or behaves like a UTRAN RNC.
- The femto gateway FGW concentrates traffic of several femto access points FAPs.
- The femto access point is a home transceiver station which can be purchased and installed by UMTS users, comparable to the installation process of today's DSL WLAN Routers.
- The femto access point provides a Uu radio interface, i.e. any authorized UMTS mobile may get connected to this femto access point, enter the femto cell and obtain services provided.
- Femto cells may be small in size. A typical size may extend to a diameter of about 30 meters.

As long as the user is outside the home environment, the user receives mobile services from the UMTS cellular network via macro cells (provided by macro cell base station). If the user stays at home, he receives the same (or better) services via the femto access point.

The femto system offers a cost efficient method for mobile users to access various mobile services. Advantageously, regarding a connection price as well as a capacity of the macro network a user of a femto access point shall get connected via the femto system whenever such thing is possible.

In order for the mobile terminal to enable an active mode handover to another cell, the macro network cell provides the mobile terminal with adjacent macro cells to be added in an active set cell list (see 3GPP TS 25.304, 25.331).

The size of the list has been set for macro network topology purposes to a maximum of 32 macro cells that may be each a destination for different sorts of handover, e.g. intrafrequency handover, interfrequency handover or intrasystem handover like WCDMA.

The problem to be solved is to overcome the disadvantages as pointed out before and in particular to provide an efficient mechanism to allow handover from a macro cell to a femto cell.

This problem is solved according to the features of the independent claims. Further embodiments result from the depending claims.

In order to overcome this problem, a method for providing and/or processing handover information by a network is suggested
- wherein the network provides information of at least one base station to a mobile terminal, wherein said at least one base station can be subject to a handover for the mobile terminal;
- wherein the information comprises information regarding at least one femto base station;
- wherein the handover information is provided separately for each mobile terminal.

The approach suggested in particular provides handover information to a mobile terminal about femto access points within reach to which the particular mobile terminal is allowed get connected.

It is to be noted that a femto base station, a femto cell or a femto access point may be a or may be associated with a home NodeB, a home base station, a femto cell or a femto (cell) base station. Such femto access point may in particular be subject to evaluation within the context of 3.5G (HSPA/WCDMA) ("3.5G home NodeB") and LTE ("LTE home NodeB"). The home NodeB may in particular be deployed as an end-user type of equipment and hence to a certain extent self-installation/organization functionality may be required and/or advantageous for such a device, in contrast to coordinated operator driven network-planning for macrodeployments.

Hence the handover information may comprise information regarding the macro cell (base station) and information regarding the at least one femto cell (base station). Such information may comprise in particular an identifier or identification and/or supplementary information regarding the particular macro cell and/or the at least one femto cell.

In a typical scenario there may be several femto access points or femto cells located within a small geographical area, wherein said area is also covered by a macro cell network. A benefit of the femto system is that a mobile terminal, in particular a user equipment (UE) is allowed to camp with the femto access point during idle mode and also to get connected via said femto access point in an active mode. This approach significantly reduces the load for the macro cell as well as overall service costs.

As pointed out, within a macro cell a large number of femto access points may be deployed. Advantageously, a list comprising the macro cells that can be used for handover purposes may be supplemented by the femto cells that are also potential destinations for handover. This enables the mobile terminal to detect the femto access point and to execute and/or initiate a handover.

In order to add a large number of femto cells (femto access points) to the yet limited list of, e.g., 32 entries, the size of the list may have to be increased. This, however, occurs to be detrimental as the mobile terminal itself then would have to measure the cells of this list thereby leading to a additional power consumption based on the high number of addressees. This would imply a reduction of the mobile terminal's standby time. Furthermore, additional signaling traffic would be produced thereby leading to tracing problems for the mobile terminal. In addition, such measurement of all cells of the list would be too time consuming for the mobile terminal and may hence have to be avoided.

Hence, advantageously, the relatively small number of "32" may be maintained and the handover information regarding femto access points (femto cells) within a macro cell is nevertheless made available by the approach provided herewith.

This advantageously enables the mobile terminal to only measure the femto cell to which the mobile terminal is allowed to get connected to.

It is noted that a femto access point may be configured prior to its deployment in particular by setting up at least one user, i.e. at least one mobile terminal that shall be allowed to get access to this particular femto cell. Hence, access rights for such mobile terminal may be set prior to the mobile terminal being able to get connected to the femto cell.

In an embodiment, the handover information is provided separately for each mobile terminal.

Hence, the macro network(s) may provide each mobile terminal with particular handover information. Such specific handover information may comprise only those femto cells or femto base stations to which the mobile terminal has permission to be connected to.

According to an embodiment, the mobile terminal is in an active mode and/or in an idle mode.

In both such modes, dedicated handover information may be provided for the mobile terminal. As an option, in idle mode the mobile terminal may be provided with a common handover information (e.g., one handover list) that may be identical to several mobile terminals (that are in idle mode).

According to a different embodiment, the network detects the mobile terminal that has access to the at least one femto base station and the information regarding the at least one femto base station is added to the handover information.

Preferably, such information is only added to the handover information (which may be realized as a handover candidate list) if the mobile terminal has permission to access the femto base station detected.

In another embodiment, the handover information is provided by a radio network controller and/or by a macro cell base station.

In a further embodiment, the handover information is provided as a data structure, in particular as a list or as a field.

Such data structure can be stored within each macro cell network or with a backbone or instance beyond the macro cell network. The data structure may be also stored more or less centrally and/or distributed throughout the network.

In a next embodiment, the handover information comprises potential candidates for a handover of the mobile terminal.

It is also an embodiment that the handover information comprises macro cell base stations and/or the at least one femto base station.

Pursuant to another embodiment, the mobile terminal is permitted to get connected to the at least one femto base station.

According to an embodiment, the handover information comprises a data structure with a limited number of entries for the at least one femto base station. Such limited number of entries may be utilized for several femto base stations by providing an alternating or changing selection of at least one femto base station via the limited number of entries. The at least one femto base station may be provided via the limited number of entries by utilizing a round robin mechanism.

According to another embodiment, the mobile terminal is handed over to a femto base station pursuant to the handover information provided.

The problem stated above is also solved by a device for providing and/or processing handover information comprising a processor unit that is equipped and/or arranged such that the method as described herein is executable on said processor unit.

According to an embodiment, the device is a communication device, in particular a network element.

The problem stated supra is further solved by a communication system comprising the device as described herein.

Embodiments of the invention are shown and illustrated in the following figures:
- Fig.2: shows three macro cells, each comprising at least one femto cell, wherein a handover list for each macro cell depicts potential destinations for a handover;
- Fig.3: shows how a handover candidate list can be dynamically updated.

Compared to the handover of mobile terminals between two macro cells, a handover from the macro cell to the femto cell may be different in particular because not all mobile terminals may be allowed to be handed over to a particular femto access point. Instead, only those mobile terminals that are allocated users (e.g., owners) of the respective femto access point are permitted to get connected thereto.

The approach provided herein in particular provides handover information to a mobile terminal about femto access points within reach to which the particular mobile terminal is allowed get connected.

The macro network may keep track of the mobile terminal's location at a cell level as is done according to the cellular network's mobility specification.

The macro cell network has been configured to know what femto cells (femto access points) are deployed within its coverage area and which mobile terminals (user equipments UEs) are permitted to which of those femto cells.

Configuration data of the femto system comprises information of each femto cell's location. The macro cell network planning has coverage area data of each macro network cell. Based on the location information of the femto cell, each macro cell will be set up to be aware of the femto cells within its coverage area.

In particular, as there may be some uncertainty regarding a coverage area at the border of the macro cell, a wider coverage area may be configured, e.g., an adjacent macro cell may have to be aware of the femto access point located in an overlap region between macro cells.

Alternatively or in addition, an accuracy of determining the femto cell's location within at least one macro network cell may be increased by utilizing macro cell radio frequency measurements processed by the femto access point to identify more exactly the corresponding macro network cell(s). In particular, at least adjacent macro cells may be identified by such measurements.

When the macro network detects an idle mobile terminal that is located within its coverage area (i.e., a handover to that macro cell has been performed or the mobile terminal camps on that macro cell) and if there is a corresponding femto cell located within said macro cell, the femto cell information can be added to a handover candidate list, in particular by utilizing the signaling channel of the macro network cell.

The identification (ID) of this femto cell may be added to a last free position of the handover candidate list. As an ID, e.g., a scrambling code of the femto cell may be used. If the list is limited to a particular number of entries, e.g., 32, and if the list is already full (e.g., for macro network purposes only), the at least one last entry/ies which are the candidates least likely to be destined for a handover may be overwritten by the femto cell ID(s).

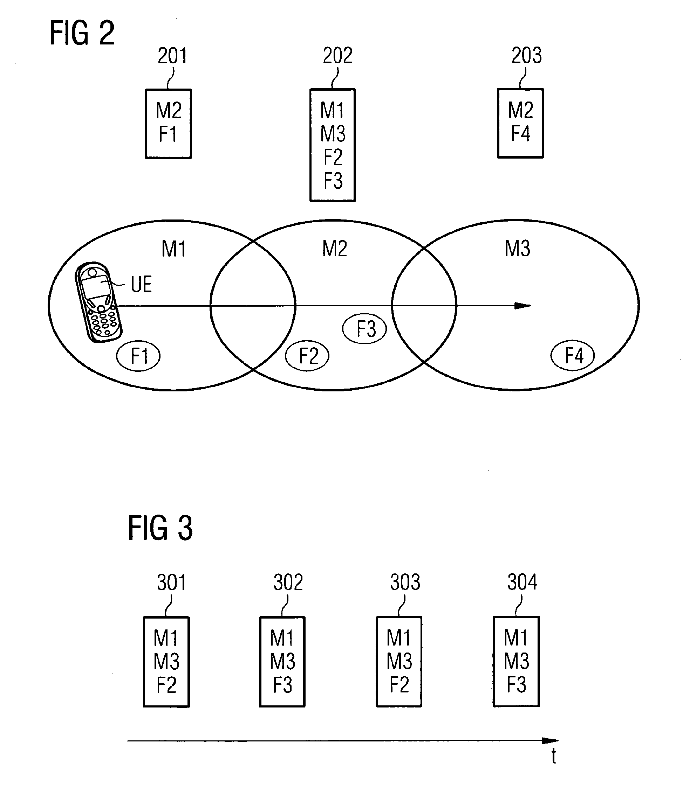

**Fig.2** shows three macro cells M1, M2 and M3, wherein the macro cell M1 comprises a femto cell F1, the macro cell M2 comprises femto cells F2 and F3 and the macro cell M3 comprises a femto cell F4.

In particular for each macro cell and for each mobile terminal UE a handover candidate list is provided (in particular by a RNC), i.e.
- for the macro cell M1 a handover candidate list 201 is provided comprising the macro cell M2 and the femto cell F2 as potential candidates for a handover to be processed;
- for the macro cell M2 a handover candidate list 202 is provided comprising the macro cells M1, M3 and the femto cells F2, F3 as potential candidates for a handover to be processed;
- for the macro cell M3 a handover candidate list 203 is provided comprising the macro cell M2 and the femto cell F4 as potential candidates for a handover to be processed.

Hence, handover information is provided and/or processed, wherein said handover information comprises handover candidate lists 201 to 203. The handover candidate lists 201 to 203 in particular show which femto cells are located within the respective macro cell's coverage area and/or which femto cells are accessible for a particular mobile terminal UE.

An arrow 204 in Fig.2 depicts an exemplary movement of the mobile terminal UE thereby crossing the coverage areas of the macro cells M1, M2 and entering the area of the macro cell M3. The handover candidate list of the respective macro cell provides the mobile terminal with potential candidates to get connected to. As pointed out before, it is an option to also provide the information via the macro cell network whether the mobile terminal UE is permitted to get access (and hence connected) to a particular femto cell. This may in particular be useful in cases a mobile terminal shall only be allowed to get connected to at least one pre-defined (or pre-selected) femto cell.

It is noted that each macro cell may signal the handover candidate list (via a common control channel) to the mobile terminal UE when the mobile terminal UE is in an active mode or in an idle mode. There may in particular be a maximum of 32 cell entries in the handover candidate list. Different lists for intrasystem handover and intersystem handover may be utilized. In particular, for a mobile terminal being in the active mode, dedicated handover lists may be used, there may in particular be one list provided for each mobile terminal UE. In the idle mode, e.g., due to its limited signaling traffic, only one list comprising handover information may be provided.

In case of an idle mode mobile terminal, at least one entry (or more than one entries) of the handover candidate list may be used for providing said mobile terminal with the femto cells that may be accessible to it (i.e. femto cells within reach and to which the mobile terminal has permission to get connected to). If the number of entries in the handover candidate list is not sufficient, a selection of femto cells can be entered for a predetermined period of time to the list. After such time, the selection may be changed to a different selection of femto cells. Thereinafter, the selection may change again and so forth.

Hence, in particular a "round robin" mechanism can be utilized for providing handover information, e.g., (IDs of) femto cells via the handover candidate list, to the mobile terminal.

In case of an active mode mobile terminal, handover candidate signaling for that mobile terminal can be done by a dedicated control channel. For active mode mobile terminals, the femto cell ID (or IDs if there are several femto cells within one macro cell to which the mobile terminal is allowed to get connected to) is added to the handover candidate list of this dedicated channel.

**Fig.3** shows how a handover candidate list can be dynamically updated. The example depicted in Fig.3 is based on the macro cell M2 according to Fig.2, wherein the handover candidate list of Fig.3 has three entries only, but two possible macro cell handover candidates, i.e. M1 and M3, and two possible femto cell handover candidates, i.e. F2 and F3. As there is not enough space in the handover candidates list, not all four potential candidates can be entered at the same time.

Hence, according to Fig.3, different lists 301 to 304 comprising three handover candidate entries are shown over a time t. The only entry representing a femto cell is utilized by switching between femto cell F2 and F3 at a given time interval.

Hence, in case the handover candidate list is or becomes full, the macro network may utilize the round robin mechanism to maintain all femto cell in the list (but not all at the same time), each for a limited time period then replace the list entry by a subsequent femto cell. For example, each item may be in the list for a certain amount of time and it may then be replaced by the next item. After all femto cell IDs have been provided by the list entries utilizing the round robin scheme, presenting the list entries may start from the beginning until the handover has been processed or until the mobile terminal moves outside the macro network area where handover to the home femto cell is no longer feasible.

When the mobile terminal executes handover to another macro network cell, relevant femto cells may be removed from the handover candidate list.

It is noted that each macro cell may be of different capability, e.g., one macro cell network may provide GSM and/or WCDMA services or UMTS services only or in combination thereof.

### Abbreviations:

- CCCH: Common Control Channel
- CN: Core Network
- DSL: Digital Subscriber Line
- DSLAM: Digital Subscriber Line Access Multiplexer
- FAP: Femto Access Point
- FGW: Femto Gateway
- HLR: Home Location Register
- HO: Handover
- MGW: Media Gateway
- RAN: Radio Access Network
- RNC: Radio Network Controller
- RNTI: Radio Network Temporary Identity
- RRC: Radio Resource Control
- SGSN: Serving GPRS Support Node
- SRNC: Serving RNC
- UE: User Equipment
- UMTS: Universal Mobile Telecommunications System
- UTRAN: UMTS Terrestrial Radio Access Network

## Claims

1. A method for providing and/or processing handover information by a network
- wherein the network provides information of at least one base station to a mobile terminal, wherein said at least one base station can be subject to a handover for the mobile terminal;
- wherein the information comprises information regarding at least one femto base station;
- wherein the handover information is provided separately for each mobile terminal.

2. The method according to claim 1, wherein the mobile terminal is in an active mode.

3. The method according to any of the preceding claims, wherein the mobile terminal is in an idle mode.

4. The method according to any of the preceding claims,
- wherein the network detects the mobile terminal that has access to the at least one femto base station;
- wherein the information regarding the at least one femto base station is added to the handover information.

5. The method according to any of the preceding claims, wherein the handover information is provided by a radio network controller and/or by a macro cell base station.

6. The method according to any of the preceding claims, wherein the handover information is provided as a data structure, in particular as a list or as a field.

7. The method according to any of the preceding claims, wherein the handover information comprises potential candidates for a handover of the mobile terminal.

8. The method according to any of the preceding claims, wherein the handover information comprises macro cell base stations and/or the at least one femto base station.

9. The method according to any of the preceding claims, wherein the mobile terminal is permitted to get connected to the at least one femto base station.

10. The method according to any of the preceding claims, wherein the handover information comprises a data structure with a limited number of entries for the at least one femto base station.

11. The method according to claim 10, wherein the limited number of entries is utilized for several femto base stations by providing an alternating selection of at least one femto base station via the limited number of entries.

12. The method according to any of claims 10 or 11, wherein the at least one femto base station is provided via the limited number of entries by utilizing a round robin mechanism.

13. The method according to any of the preceding claims, wherein the mobile terminal is handed over to a femto base station pursuant to the handover information provided.

14. A device for providing and/or processing handover information comprising a processor unit that is arranged such that the method according of any of the preceding claims is executable on said processor unit.

15. The device according to claim 14, wherein said device is a communication device, in particular a network element.

16. Communication system comprising the device according to any of claims 14 or 15.
